# EUROPÄISCHE PATENTANMELDUNG

(11) **EP 4 382 311 A1**
(43) Veröffentlichungstag der Anmeldung: **12.06.2024**
(21) Anmeldenummer: 23210666.6
(22) Anmeldetag: 17.11.2023
(51) Int. Cl.: B60B 5/02, B60B 21/02, B60B 1/00, B60B 21/06

(54) **FAHRRADFELGE UND VERFAHREN ZUR HERSTELLUNG**

(30) Priorität: 02.12.2022 DE 102022132034
(71) Anmelder: DT Swiss AG, 2504 Biel (CH)
(72) Erfinder: Henig, Andreas, 2504 Biel (CH)
(74) Vertreter: BSB Patentanwälte Schütte & Engelen Partnerschaft mbB

(57) **Zusammenfassung**

Fahrradfelge (1) für Fahrräder (100) mit einem Felgenkörper (2) mit einer im bestimmungsgemäßen Betrieb wahrnehmbaren Sichtfläche (8), wobei eine tragende Struktur (3) des Felgenkörpers (2) aus einem Faserverbundwerkstoff (4) aus Prepreglagen (5) hergestellt ist. Der Felgenkörper (2) umfasst einander gegenüberliegende Felgenflanken (21, 22), ein Felgenbett (24) und einen Felgenboden (23). Die Sichtfläche (8) wird durch eine dünne Vlieslage (9) auf der tragenden Struktur (3) ausgebildet, um direkt bei der Herstellung ohne Nacharbeit eine optisch ansprechende sichtbare Oberfläche an dem Felgenkörper (2) auszubilden. Die Vlieslage (9) bildet an dem Felgenkörper (2) eine äußere Lage (11) einer Verbundschicht (10). Die Verbundschicht (10) umfasst eine Prepreglage (5) und die Vlieslage (9).

## Beschreibung

Die Erfindung betrifft eine Fahrradfelge und ein Verfahren zur Herstellung einer Fahrradfelge aus Faserverbundwerkstoff für im bestimmungsgemäßen Gebrauch regelmäßig wenigstens teilweise muskelbetriebene Fahrzeuge und insbesondere Fahrräder.

Im Stand der Technik sind verschiedenste Fahrradfelgen aus faserverstärkten Kunststoffen bekannt geworden. Durch den Einsatz von faserverstärkten Kunststoffen bzw. Faserverbundwerkstoffen kann das Gewicht der jeweiligen Fahrradfelgen verringert werden. Gleichzeitig erreichen solche Fahrradfelgen bei geringerem Gesamtgewicht eine vergleichbare oder sogar höhere Stabilität wie entsprechende Fahrradfelgen aus metallischen Werkstoffen. Ein Nachteil derartiger Fahrradfelgen aus Faserverbundwerkstoff ist allerdings die aufwendige Herstellung, da viele Herstellungsschritte meist von Hand durchgeführt werden müssen. Das führt zu höheren Kosten. Außerdem sind die vielen manuellen Verfahrensschritte fehleranfällig, wodurch die Ausschussrate steigt und die Herstellkosten nochmals erhöht werden. Andererseits sind die Stückzahlen hochwertiger Fahrradfelgen nicht so groß, dass sich die Entwicklung und der Aufbau einer voll automatisierten Fertigung rechnen würde.

Ein erhebliches Problem bei der Herstellung von Fahrradfelgen aus Faserverbundwerkstoff ist es, eine hochwertige Oberfläche herzustellen. Es gibt zwar seit Jahren Ansätze und Versuche Fahrradfelgen aus Faserverbundwerkstoff ohne aufwendige Nacharbeit direkt aus der Form zu entnehmen, aber bislang sind die dafür nötigen Verfahren entweder noch nicht erfolgreich genug oder sehr aufwendig und damit teuer.

Sollen hochwertige Fahrradfelgen aus Faserverbundwerkstoff hergestellt werden, so legen die Kunden aber regelmäßig hohe Maßstäbe an die Qualität und auch das optische Erscheinungsbild solcher Komponenten. Das führt dazu, dass Fahrradfelgen aus Faserverbundwerkstoff regelmäßig nachbearbeitet werden müssen, um die geforderte Oberflächenqualität zu gewährleisten. Kleine Lufteinschlüsse an der Oberfläche und andere optische Defekte werden regelmäßig nicht toleriert, auch wenn sie sich an sich nicht auf die Stabilität der Fahrradfelge auswirken. In vielen Fällen werden Fahrradfelgen aus Faserverbundwerkstoffen deshalb nach der Entnahme aus der Herstellform mit einem Lacküberzug versehen, um kleinere und größere optische Defekte zu kaschieren bzw. zu verdecken. Das ist aufwendig und somit teuer und erhöht zusätzlich das Gewicht der damit hergestellten Fahrradfelgen.

Es ist deshalb die Aufgabe der vorliegenden Erfindung, eine Fahrradfelge und ein Verfahren zur Herstellung einer Fahrradfelge aus Faserverbundwerkstoff zur Verfügung zu stellen, womit Fahrradfelgen mit besserer Qualität und einer geringeren Ausschussrate herstellbar sind. Insbesondere soll die Oberflächenqualität der Sichtfläche regelmäßig auch ohne eine großflächige Nachbearbeitung auch hohen Ansprüchen genügen.

Diese Aufgabe wird durch eine Fahrradfelge mit den Merkmalen des Anspruchs 1 und durch ein Verfahren zur Herstellung einer Fahrradfelge mit den Merkmalen des Anspruchs 10 gelöst. Bevorzugte Weiterbildungen und Ausgestaltungen der Erfindung sind Gegenstand der jeweiligen Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Fahrradfelge ist insbesondere für wenigstens teilweise muskelbetriebene Fahrzeuge und vorzugsweise Fahrräder vorgesehen. Die Fahrradfelge weist wenigstens einen Felgenkörper auf, der eine im bestimmungsgemäßen Zusammenbau und Betrieb (unmittelbar) wahrnehmbare bzw. sichtbare Sichtfläche aufweist. Der Felgenkörper umfasst einander gegenüberliegende Felgenflanken, ein Felgenbett und einen Felgenboden. Eine tragende Struktur des Felgenkörpers ist teilweise oder wenigstens im Wesentlichen oder vorzugsweise vollständig aus einem bzw. wenigstens einem Faserverbundwerkstoff aus Prepreglagen hergestellt. Die Sichtfläche des Felgenkörpers wird durch eine (dünne) Vlieslage auf der tragenden Struktur ausgebildet, um bei der Herstellung (direkt aus der Form heraus - Englisch: "out of the mold") eine optisch ansprechende sichtbare Oberfläche an dem Felgenkörper auszubilden. Dabei bildet die Vlieslage an dem Felgenkörper eine äußere Lage. Die Vlieslage ist ein Teil oder Bestandteil einer Verbundschicht, welche wenigstens eine Prepreglage und die Vlieslage umfasst.

Die erfindungsgemäße Fahrradfelge hat viele Vorteile. Ein erheblicher Vorteil der erfindungsgemäßen Fahrradfelge besteht darin, dass an der sichtbaren Außenfläche auf der tragenden Struktur eine (dünne) Vlieslage angeordnet bzw. ausgebildet ist, um eine hochwertige Sichtfläche direkt zur Verfügung zu stellen. Ein Vorteil ist auch, dass durch die Verbundschicht mit wenigstens einer Prepreglage und der Vlieslage die Homogenität und Stabilität der Felgenstruktur verbessert werden kann. Es hat sich überraschenderweise herausgestellt, dass mit einer dünnen Vlieslage an der sichtbaren Außenseite der Fahrradfelge eine höhere Oberflächenqualität direkt erzielbar ist als ohne eine derartige Vlieslage an der sichtbaren Außenfläche. Eine solche Vlieslage verhindert oder reduziert wenigstens wesentlich die Anzahl von Fehlstellen an der Sichtfläche. Dadurch wird ein Nacharbeiten der Sichtfläche und insbesondere ein Nachlackieren der Sichtfläche zur Verdeckung von Lufteinschlüssen und anderen Fehlstellen weitgehend vermieden.

Die Vlieslage ist ein Teil einer Verbundschicht, welche wenigstens eine Prepreglage und die Vlieslage umfasst. Die Verbundschicht wird zuvor vorbereitet und es ist dadurch möglich, die Verbundschicht perfekt vorzubereiten und zu drapieren. Dadurch kann ein auch minimaler Faltenwurf der Prepreglage und der Vlieslage vermieden werden. Das kann durch Untersuchungen der Felgenstruktur an fertigen Felgen bestätigt werden. Die Herstellung ist einfacher, schneller und kostengünstiger und die Fahrradfelge bietet eine hohe und perfekte Oberflächenqualität kombiniert mit höchster Festigkeit und Stabilität. Ein nacheinander erfolgendes Auftragen von Prepreglage und Vlieslage würde zu einer mikroskopisch feststellbaren unterschiedlichen Struktur führen, da die Drapierung und das Auflegen der Vlieslage nicht faltenfrei - und somit feststellbar - gelingen kann. Durch Schnitte oder Röntgen- oder CT-Untersuchungen oder andere Messverfahren ist ein struktureller Unterschied aufgrund lokaler Verschiebungen der Prepreglage und der Vlieslage relativ zueinander messbar. Die Homogenität ist bei Aufbringung einer Verbundschicht aus wenigstens einer Prepeglage und einer Vlieslage erheblich besser und somit ist auch die Stabilität besser, da andernfalls auch unerwünschte lokale Stauchungen oder Dehnungen der Prepreglage auftreten können.

Bei Fahrradfelgen kommt es im Gegensatz zu vielen anderen Fahrradteilen darauf an, dass die Qualität über dem gesamten Umfang gleichbleibend hoch ist, da jede einzelne Umfangsstelle periodisch belastet und entlastet wird, während sich das Laufrad über den Boden bewegt.

Es ist möglich, dass die tragende Struktur wenigstens zum Teil durch eine Verbundschicht mit (wenigstens) einer Prepreglage und einer äußeren Vlieslage gebildet wird, um eine optisch ansprechende sichtbare Oberfläche an dem Felgenkörper und durch die eine stabilere tragende Struktur auszubilden.

Die erfindungsgemäße Fahrradfelge ist einfach und relativ kostengünstig herstellbar. Das erhöht die Wirtschaftlichkeit, während gleichzeitig die Qualität gesteigert werden kann.

Bei der Fahrradfelge werden Prepreglagen verwendet, die Verstärkungsfasern und Harzmaterial umfassen. Dabei ist besonders bevorzugt die Menge des Harzmaterials in dem Prepreg so bemessen, dass regelmäßig kein zusätzliches Harzmaterial bei der Herstellung zugegeben werden muss. Wenigstens 95% des benötigten Harzmaterials sind in den Prepregs vorhanden.

Die Sichtfläche ist wenigstens zu einem erheblichen Teil und insbesondere im Wesentlichen oder vollständig durch die Vlieslage ausgebildet. Insbesondere ist die Vlieslage an dem Felgenkörper eine äußere Lage einer Verbundschicht, welche wenigstens eine Prepreglage und die Vlieslage umfasst. Der Einsatz von Verbundschichten ist vorteilhaft, da damit die Herstellung vereinfacht und vorzugsweise die Qualität erhöht wird. Denkbar ist auch der Einsatz von zwei oder mehr (noch dünneren) Vlieslagen, aber das erhöht nicht unerheblich den Aufwand. Da die Vlieslage(n) nicht die tragende Struktur bilden, ist es an sich auch vorteilhafter, nur eine einzige Vlieslage einzusetzen. Im Einzelfall kann es aber Gründe geben, zwei (oder mehr besonders dünne) Vlieslagen aufzubringen.

Alle bislang bekannten Verfahren für die Herstellung von Fahrradfelgen aus Faserverbundbauteilen haben mit optischen Defekten zu kämpfen. Um ein Produkt mit einer aus der Form heraus verkaufsfähigen Oberfläche ("out of the mold"-Finish) in der Serienproduktion zu erhalten. Die Erfindung löst dies Problem in einem erheblichen Maße. Die ausgehärtete Fahrradfelge wird nach dem Entformen aus dem Werkzeug aus optischen Gründen nicht mehr bearbeitet. Dazu wird als äußerste Sichtlage (wenigstens) eine Vlieslage aufgebracht. Dabei ist die Vliesschicht insgesamt sehr dünn.

Besonders bevorzugt umfasst die Verbundschicht zwei oder mehr Prepreglagen und die Vlieslage. Dabei ist es möglich und bevorzugt, dass zwei (oder mehr) Prepreglagen unterschiedlich orientierte Verstärkungsfasern aufweisen. Das erhöht die Stabilität und Belastbarkeit der Fahrradfelge.

In bevorzugten Ausgestaltungen umfasst wenigstens eine Prepreglage unidirektionale Verstärkungsfasern (UD-Lagen). Es ist aber auch möglich und besonders bevorzugt, dass wenigstens eine Prepreglage (oder alle Prepreglagen) als Gewebelage ausgebildet ist. So können auch beide Prepreglagen als Gewebelagen ausgebildet sein. Beispielsweise können die Verstärkungsfasern in den Gewebelagen zueinander gewinkelt ausgerichtet sein, um die Belastbarkeit in verschiedene Raumrichtungen zu erhöhen.

In besonders bevorzugten Ausgestaltungen kann die tragende Struktur weitere Prepreglagen als Verstärkungslagen umfassen. So kann an einzelnen Stellen oder generell der Einsatz zusätzlicher Verstärkungslagen vorgesehen sein.

Vorzugsweise trägt die Vlieslage weniger als 10 % und besonders bevorzugt weniger als 5 % (oder weniger als 2,5% oder noch weniger) zu der Stabilität des Felgenkörpers bei. In besonderen Ausgestaltungen ist es auch möglich, dass die Vlieslage etwas mehr, aber regelmäßig weniger als 25 % oder 33% zu der Stabilität des Felgenkörpers beiträgt. Grundsätzlich ist der Beitrag der Vlieslage(n) zur Stabilität vernachlässigbar.

Besonders bevorzugt dient die Vlieslage praktisch nur zur Erzeugung einer hochwertigen Oberfläche ohne Lufteinschlüsse und dergleichen. Insofern kann die Vlieslage aus Stabilitätsgründen regelmäßig weggelassen werden bzw. ist regelmäßig nicht nötig, um die Stabilität des Felgenkörpers zu gewährleisten. Unter der Stabilität einer Fahrradfelge wird insbesondere eine Widerstandsfähigkeit gegen Zerreißen oder Zerbrechen durch mechanische Einflüsse und/oder die Biegefestigkeit und/oder die Stoßfestigkeit und/oder die Schlagfestigkeit und/oder die Zähigkeit einer Fahrradfelge verstanden. Die Vlieslage trägt bei wenigstens einer dieser Eigenschaften weniger als 20 % oder weniger als 10 % oder weniger als 5 % zu der Belastbarkeit des Felgenkörpers bei.

In bevorzugten Ausgestaltungen beträgt eine Dicke der Vlieslage weniger als 33% oder weniger als 25% oder weniger als 20 % oder weniger als 10 % oder weniger als 5 % der Wandstärke der tragenden Struktur des Felgenkörpers. Dabei kann als relevantes Maß für die Wandstärke der tragenden Struktur insbesondere die maximale Wandstärke der tragenden Struktur des Felgenkörpers als Vergleichsmaß herangezogen werden. In bevorzugten Ausgestaltungen kann als relevantes Maß für die Wandstärke der tragenden Struktur eine durchschnittliche Wandstärke oder sogar die minimale Wandstärke der tragenden Struktur angesetzt werden.

In allen Ausgestaltungen ist es bevorzugt, dass eine Dicke der Vlieslage weniger als 0,5 mm und insbesondere weniger als 0,3 mm beträgt. Die Dicke der Vlieslage kann auch weniger als 0,1 mm betragen.

Ein Flächengewicht des Fasermaterials der Vlieslage beträgt vorzugsweise weniger als 25 Gramm pro Quadratmeter (ohne Harz bzw. im unimprägnierten Zustand). Vorzugsweise weist die Vlieslage ein Trockengewicht von zwischen 3 Gramm pro Quadratmeter und 30 Gramm pro Quadratmeter auf. Besonders bevorzugt liegt das Trockengewicht der Vlieslage zwischen 3 und 15 Gramm pro Quadratmeter und vorzugsweise zwischen 4 und 12 Gramm pro Quadratmeter. In besonders bevorzugten Ausgestaltungen beträgt das Flächengewicht des Fasermaterials der Vlieslage etwa 8 Gramm pro Quadratmeter (+/- 50 %). Das zeigt, dass die Vlieslage sehr leicht ist und nur einen geringen Gewichtsanteil an dem Gewicht der entsprechenden Fahrradfelge aufweist. Der Gewichtsanteil der Vlieslage an dem Gesamtgewicht des Felgenkörpers ist vorzugsweise kleiner 20 % und insbesondere kleiner 10 % und kann auch weniger als 5 % oder 3 % oder 1,5 % betragen. Das geringe Gewicht zeigt auch, dass die Vlieslage zur Herstellung einer hohen optischen Qualität dient und nicht zur (besonderen bzw. relevanten) Erhöhung der Stabilität vorgesehen ist.

In bevorzugten Ausgestaltungen umfassen die Prepreglagen Endlosfasern. Bei der Herstellung werden die Prepreglagen auf eine entsprechende Lagengröße zurechtgeschnitten, sodass die Verstärkungsfasern jedenfalls dann jeweils an dem Ende der Lagengröße enden. Für die Prepreglagen werden besonders bevorzugt keine Kurzfasern verwendet, sondern lang ausgebildete Verstärkungsfasern, die insbesondere miteinander verwebt oder aber miteinander verflochten oder dergleichen sind.

In vorteilhafter Weise ist die Vlieslage als Prepreg-Vlies ausgebildet und umfasst Vliesfasern unterschiedlicher Länge und Harz als Matrixmaterial. Die Vliesfasern sind insbesondere wirr angeordnet und insgesamt vorzugsweise gleichmäßig verteilt.

Besonders bevorzugt beträgt der Vliesanteil an der Vlieslage (Matrixgehalt) zwischen 15 % und 75 % und insbesondere liegt der Vliesanteil an der Vlieslage bei 40 % +/-20 %.

In allen Ausgestaltungen ist es bevorzugt, dass die Prepreglagen Carbonfasern und/oder Glasfasern als Verstärkungsfasern umfassen. Ebenso ist es bevorzugt, dass die Vlieslage Carbonfasern, Polyesterfasern und/oder Glasfasern als Vliesfasern umfasst. Carbonfasern sind besonders leicht. Dadurch kann eine leichte und stabile Fahrradfelge zu Verfügung gestellt werden.

In besonders bevorzugten Ausgestaltungen ist die Fahrradfelge als Hohlkammerfelge ausgebildet. Die Fahrradfelge umfasst vorzugsweise einen Felgenkörper mit einander gegenüberliegenden Felgenflanken, ein Felgenbett und einen Felgenboden. In dem Felgenboden können Speichenlöcher und ein Ventilloch vorgesehen sein. Eine (umlaufende) Hohlkammer wird durch die seitlichen Felgenflanken, das radial äußere Felgenbett und den radial inneren Felgenboden begrenzt.

In allen Ausgestaltungen kann die Fahrradfelge eine Mehrzahl von Felgenkörpern umfassen. Es kann auch ein Fahrrad zur Verfügung gestellt werden, welches mehrere anmeldungsgemäße Fahrradfelgen bzw. zwei oder Mehr damit ausgerüstete Laufräder umfasst.

Das erfindungsgemäße Verfahren dient zur Herstellung einer Fahrradfelge, wobei die Fahrradfelge wenigstens einen Felgenkörper aufweist, bei dem die tragende Struktur aus einem Faserverbundwerkstoff aus Prepreglagen hergestellt wird. Eine solche Fahrradfelge ist insbesondere für wenigstens teilweise muskelbetriebene Fahrzeuge und insbesondere Fahrräder vorgesehen. Zur Ausbildung einer im bestimmungsgemäßen Betrieb wahrnehmbaren bzw. sichtbaren Sichtfläche an dem Felgenkörper wird eine Verbundschicht aus einer (dünnen) Vlieslage und wenigstens einer Prepreglage in die Herstellform eingebracht. Das erfolgt so, dass die Vlieslage an der Herstellform anliegt. Die Sichtfläche wird durch die dünne Vlieslage und die tragende Struktur wird durch die Prepreglagen ausgebildet. Bei der Herstellung wird (direkt aus der Herstellform heraus) eine optisch ansprechende sichtbare Oberfläche an dem Felgenkörper ausgebildet.

Auch das erfindungsgemäße Verfahren hat viele Vorteile. Ein erheblicher Vorteil ist, dass auf einfache Art und Weise Fahrradfelgen mit einer hohen und höheren Oberflächenqualität hergestellt werden können. Auf viele aufwendige Nacharbeiten kann verzichtet werden.

Dabei werden Prepreglagen eingesetzt, die Verstärkungsfasern und Harzmaterial umfassen. Mit der Vlieslage wird eine optisch ansprechende sichtbare Oberfläche ausgebildet, wobei die Prepreglagen die stabile und tragende Struktur des Felgenkörpers bilden.

Vorzugsweise wird die Verbundschicht zuvor dadurch gebildet, dass wenigstens eine Prepreglage mit der Vlieslage verbunden wird. In einfachen und bevorzugten Fällen wird zur Ausbildung der Verbundschicht eine Prepreglage auf eine Unterlage aufgelegt und darauf wird die Vlieslage gelegt und an die wenigstens eine Prepreglage angedrückt. Die leichte Vlieslage kann allein nicht ohne Weiteres in eine komplexe dreidimensionale Form eingelegt und dort drapiert werden, um eine hochqualitative und hochwertige Oberfläche zur Verfügung zu stellen. Die Drapierbarkeit (also die sphärische Verformbarkeit eines Flächengebildes ohne Faltenbildung) der Vlieslage an sich, ist eingeschränkt. Deshalb wird zunächst eine Verbundschicht aus wenigstens einer Prepreglage und insbesondere zwei Prepreglagen und einer Vlieslage gebildet. Die Verbundschicht ist insgesamt auch an dreidimensionalen und komplexen Strukturen drapierbar und kann an die Formgebung der Herstellform ganz ohne oder ohne nennenswerte Faltenbildung angepasst werden. Grundsätzlich könnte auch die Vlieslage alleine in das Werkzeug gelegt werden, aber das ist nicht einfach und nur schwer zu handeln.

Vorzugsweise wird die Verbundschicht vor dem Einlegen in die Herstellform vakuumiert. Die Verbundschicht wird aber vor dem Aushärten in die Herstellform eingelegt.

Besonders bevorzugt wird die Verbundschicht durch zwei Prepreglagen und die Vlieslage gebildet. Dabei werden die Prepreglagen insbesondere so aufeinander positioniert, dass die Verstärkungsfasern der Prepreglagen nicht alle identisch in die gleiche Richtung verlaufen.

Vorzugsweise wird die Verbundschicht vollflächig an die Herstellform angedrückt. Dadurch wird sichergestellt, dass eine hochwertige Fahrradfelge hergestellt wird. Durch das vollflächige Andrücken (zeitgleich oder an unterschiedlichen Stellen nacheinander) wird die Anzahl von Fehlstellen erheblich reduziert. Eventuell vorhandene Luft wird dadurch beseitigt.

In allen Ausgestaltungen ist es möglich und bevorzugt, dass nach dem Einbringen bzw. Einlegen der Verbundschicht in die Herstellform Verstärkungslagen (zusätzlich) in die Herstellform eingebracht bzw. eingelegt werden. Dadurch kann die tragende Struktur lokal angepasst und bedarfsweise verstärkt werden.

In allen Ausgestaltungen ist es möglich und bevorzugt, dass die mit den Prepreglagen und der Vlieslage und gegebenenfalls mit Verstärkungslagen bestückte Herstellform evakuiert wird. Dabei kann die Herstellform in eine Presseinrichtung eingebracht und beheizt werden.

Nach dem Aushärten wird die Fahrradfelge aus der Herstellform entnommen und an Trennstellen der Herstellform kann eventuell ausgetretenes Harz leicht entfernt werden. Die Sichtfläche benötigt regelmäßig keinerlei Nachbearbeitung.

Wenn beispielsweise mit dem anmeldungsgemäßen Verfahren eine Felge als Fahrradfelge hergestellt wird, die Felgenflanken, ein Felgenbett und einen Felgenboden aufweist, so wird vorzugsweise auf dem das Felgenbett ausbildenden Ringteil (bzw. dessen Segmenten) der Herstellform unmittelbar eine Prepreglage aufgebracht. Dort ist es nicht nötig, eine Vlieslage aufzubringen, da das Felgenbett im bestimmungsgemäßen Betrieb ein nicht sichtbarer Teil einer Felge ist. Bei einer Felge ist es wesentlich, dass die Felgenflanken, die gegebenenfalls vorhandenen Felgenhörner und der Felgenboden eine hohe optische Qualität aufweisen.

Nach der Entnahme einer Felge als Fahrradfelge kann beispielsweise noch das Einbringen von Speichenlöchern und einem Ventilloch erfolgen.

Die Anmelderin behält sich vor, eine Fahrradfelge separat zu beanspruchen, die für wenigstens teilweise muskelbetriebene Fahrzeuge und insbesondere Fahrräder vorgesehen ist und einen Felgenkörper aufweist, der eine Sichtfläche an wenigstens einer äußeren Oberfläche aufweist. Die Sichtfläche wird im Wesentlichen von einer Verbundschicht zur Verfügung gestellt, wobei die Verbundschicht wenigstens eine Prepreglage und eine damit verbundene äußere Vlieslage umfasst. Dabei bildet die äußere Vlieslage die Sichtfläche.

Insgesamt werden mit dem anmeldungsgemäßen Verfahren hochwertige Fahrradfelgen hergestellt, die regelmäßig keine optischen Defekte an den Sichtflächen aufweisen. Das ermöglicht eine Kostenreduktion durch die Zeitersparnis und durch das Wegfallen nachträglicher Behandlungsschritte zur Beseitigung optischer Defekte. So können Prozessschritte wie Schleifen, das Ausbessern von Defekten und das Lackieren wegfallen. Eine Kostenreduktion wird auch durch eine Verringerung der Ausschussquote durch eine geringere Anzahl von optischen Defekten erreicht.

In bevorzugten Ausgestaltungen werden zwei Prepreglagen mit unidirektionalen Fasern (UD-Prepreglagen) mit unterschiedlicher Winkelausrichtung (zum Beispiel +/- 45°) zueinander zu einem Gelege bzw. einer Doppellage zusammengelegt. Auf das Gelege wird dann vorzugsweise eine Prepreg-Vlieslage gelegt und dort angedrückt und vorzugsweise vakuumiert, sodass eine Verbundschicht aus drei Lagen entsteht. Die Verbundschicht kann auf die benötigte Form und Dimension zugeschnitten werden. Die Verbundschicht wird dann mit der Vliesseite zum Werkzeug bzw. zur Herstellform zeigen und in die Herstellform eingelegt und dort insbesondere angedrückt. Anschließend können weitere Verstärkungslagen eingelegt werden. Nach dem Verschließen der Herstellform wird vorzugsweise in einer Heißpresse unter Druck und Vakuum ausgehärtet. Die Fahrradfelge wie zum Beispiel eine Felge kann aus der Herstellform entnommen werden und es kann überschüssiges Harz entfernt werden. Weitere Prozessschritte wie das Bohren von Speichenlöchern oder das Entnehmen eines Folienschlauchs können folgen.

Durch die Vlieslage wird eine deutliche Verbesserung der Oberflächengüte erzielt. Es gibt nur sehr wenige oder gar keine Oberflächendefekte. Dadurch kann eine Reduzierung von Arbeitszeit, Kosten und Anzahl der Prozessschritte erfolgen. Dadurch wird es ermöglicht, eine verkaufsfähige Oberfläche direkt aus der Herstellform (englisch: "out of the mold") erreicht. Eine Nacharbeit von der Fahrradfelge ist regelmäßig nicht nötig. Ein Schleifen oder Lackieren kann entfallen.

Es wird eine höhere Effektivität erreicht, da weniger bzw. keine Folgeoperationen nötig sind. Es kann das Gewicht der Fahrradfelge durch eine fehlende Lackierung verbessert werden. Weiterhin kann die Umweltbilanz verbessert werden und es wird ein einfaches und sehr hochwertiges Produkt zur Verfügung gestellt, was sich von einfachen Massenproduktionen unterscheidet.

Weitere Vorteile und Merkmale der vorliegenden Erfindung ergeben sich aus den Ausführungsbeispielen, die im Folgenden mit Bezug auf die beiliegenden Figuren erläutert werden.

In den Figuren zeigen:
- Fig. 1: eine schematische Darstellung eines Mountainbikes mit erfindungsgemäßen Fahrradfelgen;
- Fig. 2: eine schematische Darstellung eines Rennrades mit erfindungsgemäßen Fahrradfelgen;
- Fig. 3: eine erfindungsgemäße Fahrradfelge;
- Fig. 4a, 4b: eine Vlieslage und zwei Prepreglagen bei der Herstellung der erfindungsgemäßen Fahrradfelge;
- Fig. 5a-5c: verschiedene Schritte bei der Herstellung einer erfindungsgemäßen Felge für ein Fahhrad; und
- Fig. 6: eine perspektivische Ansicht einer erfindungsgemäßen Fahrradfelge.

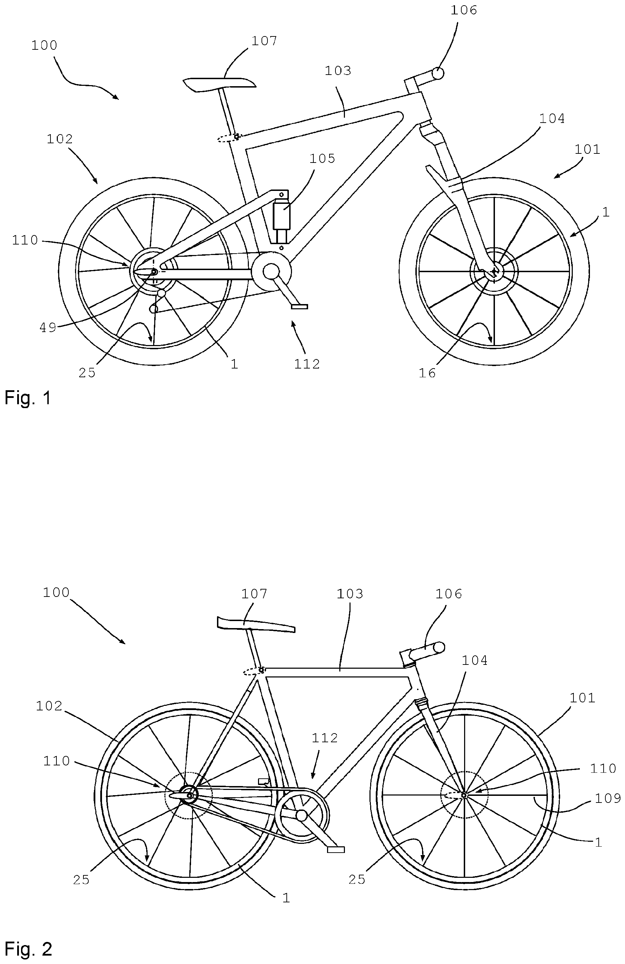

In den Figuren 1 und 2 sind jeweils ein Mountainbike bzw. ein Rennrad 100 dargestellt, die jeweils mit anmeldungsgemäßen Fahrradfelgen 1 ausgerüstet sind. Das Mountainbike bzw. Rennrad 100 verfügen jeweils über ein Vorderrad 101 und ein Hinterrad 102, an denen jeweils anmeldungsgemäße Fahrradfelgen 1 bzw. Felgen eingesetzt sind. Die beiden Räder 101, 102 verfügen über Speichen 109, um die Felgen 1 mit den Naben 110 zu verbinden. An der Felge 1 sind dazu Speichenlöcher 25 vorgesehen. Das Mountainbike bzw. Rennrad 100 weisen jeweils eine Lenkstange 30 als und einen Rahmen 103 auf.

Ein Rad 100 verfügt über einen Rahmen 103 mit Rahmenbauteilen 40, einen Lenker 106 mit einer Lenkstange 30, einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe 110 der Räder kann jeweils über ein Spannsystem wie zum Beispiel eine Steckachse oder einen Schnellspanner an dem Rahmen befestigt sein.

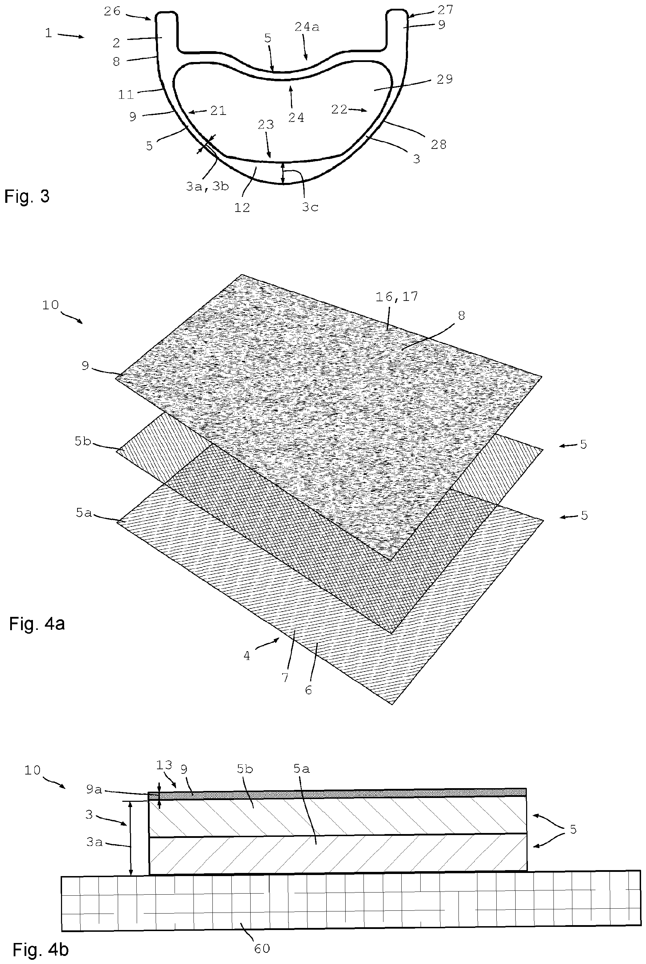

Figur 3 zeigt eine Fahrradfelge bzw. Felge 1 als Fahrradkomponente in einem schematischen Querschnitt. Die Felge 1 ist als Hohlkammerfelge ausgeführt und verfügt über eine Hohlkammer 29 im Inneren der Felge 1 zwischen dem radial inneren Felgenboden 23 und dem radial äußeren Felgenbett 24. Seitlich sind Felgenflanken 21 und 22 vorgesehen, die sich hier bauchig zwischen dem Felgenboden 23 und den radial äußeren Felgenhörnern 26 und 27 erstrecken. Die Felge 1 verfügt über einen Komponentenkörper bzw. Felgenkörper 2, dessen tragende Struktur 3 durch Prepreglagen 5 zur Verfügung gestellt wird. Die radial äußere Seite 24a des Felgenbettes 24 zwischen den Felgenhörnern 26 und 27 ist im bestimmungsgemäßen Gebrauch regelmäßig nicht sichtbar, da dort der Reifen plus gegebenenfalls ein Schlauch aufgenommen werden.

Die Sichtfläche 8 erstreckt sich deshalb hier auf der inneren Außenfläche 28 von dem Felgenhorn 26 über den Felgenboden 23 bis zu der anderen Felgenflanke 22 gegenüber. Die Sichtfläche 8 wird hier durch eine Vlieslage 9 zur Verfügung gestellt (vergleiche Figuren 4a und 4b), die sich hier über die innere Außenseite 28 und über die Felgenflanken 21, 22 und den Felgenboden 23 bis einschließlich der Felgenhörner 26, 27 erstreckt. Die dünne und leichte Vlieslage 9 weist vorzugsweise ein Endgewicht von weniger als 10 Gramm auf. Insbesondere ist der Gewichtsanteil der Vlieslage (Harz plus Fasern) an dem Gesamtgewicht der Felge 1 kleiner als 2 % oder sogar kleiner als 1,5 % und kann auch kleiner als 1 % oder kleiner 0,5 % sein.

Überraschenderweise wird es mit der Vlieslage 9 erreicht, die optische Qualität der aus der Herstellform 50 entnommenen Felge 1 erheblich zu verbessern und die Anzahl von Defekten auf der Sichtfläche 8 soweit zu verringern, dass eine Nacharbeit regelmäßig nicht nötig ist und somit die Herstellkosten gesenkt und die Qualität der Felge 1 gesteigert werden können.

Die tragende Struktur 3 wird durch mehrere Prepreglagen 5 gebildet. Die tragende Struktur 3 stellt den wesentlichen Anteil der Stabilität des Felgenkörpers 2 bereit. Die Vlieslage 9 trägt nur in einem sehr geringen Maße von 5 %, 10 % oder vielleicht 15 % zu der Stabilität des Felgenkörpers 2 bei. Der weitaus überwiegende Teil (80 %, 90 % oder mehr) der Stabilität der tragenden Struktur 3 bzw. des Felgenkörpers 2 wird durch die Prepreglagen 5 aus Faserverbundwerkstoff 4 zur Verfügung gestellt. Eine minimale Wandstärke 3b der tragenden Struktur 3 wird hier im bauchigen Bereich der Felgenflanken 21 und 22 ausgebildet, während im Bereich des Felgenbodens 23 durch zusätzlich eingebrachte Verstärkungslagen 12 eine größere maximale Wandstärke 3c der tragenden Struktur 3 erzielt wird, abgesehen von Kreuzungspunkten wie den Verbindungspunkten von Felgenbett 24 und Felgenflanken 21, 22.

Grundsätzlich stellt die äußere Lage 11 die Sichtfläche 8 durch eine Vlieslage 9 zur Verfügung. Nach innen hin schließen sich die Prepreglagen 5a und 5b an, die die tragende Struktur 3 des Felgenkörpers 2 ausbilden. Weitere Verstärkungslagen 12 können innen umfasst sein.

Figur 4a zeigt eine schematische perspektivische Darstellung einer Vlieslage und zweier Prepreglagen 5a und 5b, die zusammengefügt werden, um eine Verbundschicht 10 zu bilden, die dann anschließend in eine Herstellform 50 eingelegt wird, um eine Fahrradfelge 1 herzustellen.

Figur 4b zeigt eine schematische und geschnittene Seitenansicht der Verbundschicht 10 auf einer Unterlage 60. Zunächst wird eine (erste) Prepreglage 5a auf der Unterlage 60 positioniert. Anschließend wird eine zweite Prepreglage 5b auf der ersten Prepreglage 5a angeordnet. Darauf wird schließlich die sehr leichte, dünne und auch deshalb schwierig zu drapierende Vlieslage 9 möglichst faltenfrei aufgelegt, um eine Verbundlage aus drei Schichten als Verbundschicht 10 zu bilden. Die aufeinanderliegenden Prepreglagen 5a, 5b und die Vlieslage 9 werden aneinandergedrückt. Möglich ist es, dass die Verbundschicht 10 vakuumiert wird, um eine möglichst homogene und eng aneinander anliegende Verbundschicht auszubilden.

Bei größeren Produktion kann eine Herstellung der Verbundschicht 10 auch über eine automatische Zuführung von Prepreglagen 5a (und 5b) und wenigstens einer Vlieslage 9 erfolgen, die jeweils von einer Rolle abgewickelt und zusammengeführt und aneinander angedrückt werden. Die Verbundschicht 10 kann dann bedarfsweise zugeschnitten werden.

Dadurch, dass für die Faserlagen 5a und 5b und die Vlieslage 9 jeweils Prepregs verwendet werden, haften diese Lagen aneinander und ermöglichen damit auf einfache Weise ein gemeinsames Drapieren in der Herstellform 50.

Wie in Figur 4a zu erkennen, verlaufen die Verstärkungsfasern 6 der beiden Prepreglagen 5a und 5b quer zueinander und ermöglichen so insgesamt eine höhere Stabilität einer derart hergestellten Fahrradfelge 1. Als Matrixmaterial wird ein Harzmaterial 7 eingesetzt, sodass für die Verbundschicht 10 und auch sonst kein zusätzliches Harz erforderlich ist. Die Vlieslage 9 umfasst ein Fasermaterial 16 in Form von Vliesfasern 17. Die Vliesfasern können durch kurzfaserige und/oder durch langfaserige Verstärkungsfasern gebildet werden. Die Vliesfasern 17 sind dabei homogen über der Fläche der Vlieslage 9 verteilt und sind wirr und an sich ungeordnet zueinander angeordnet und nicht miteinander verwebt oder miteinander verflochten.

Figur 4b zeigt schematisch die beiden Prepreglagen 5a und 5b und die auf der zweiten Prepreglage 5b angeordnete Vlieslage 9, die am fertigen Bauteil die sichtbare äußere Oberfläche bildet. Klar erkennbar ist, dass eine Dicke 9a der Vlieslage 9 erheblich geringer ist als eine Wandstärke 3a der tragenden Struktur 3, die durch die Prepreglagen 5a und 5b gebildet wird. Im Ausführungsbeispiel beträgt eine Dicke 9a der Vlieslage 9 weniger als 1/10 der Wandstärke 3a der tragenden Struktur 3, die hier nur aus den beiden Prepreglagen 5a und 5b gebildet wird. Dadurch trägt die Vlieslage 9 nur sehr wenig zum Gesamtgewicht der Fahrradfelge 1 bei.

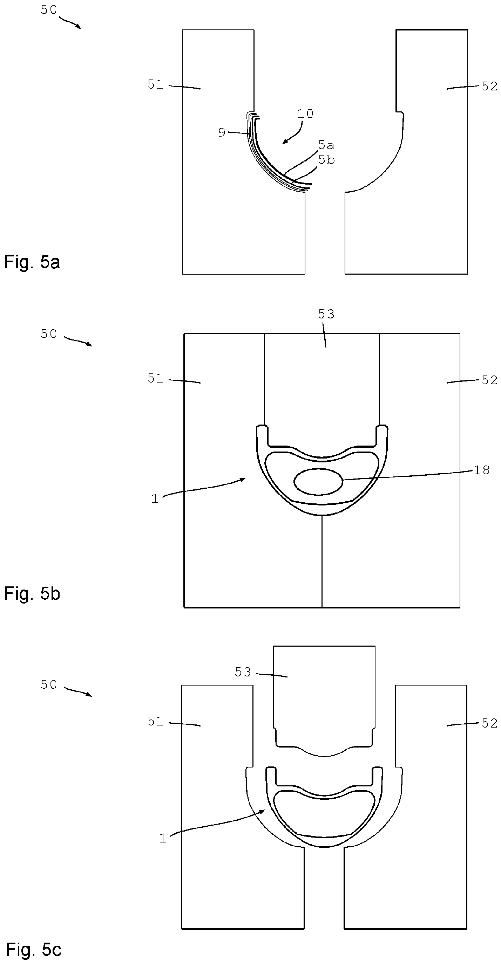

Figuren 5a bis 5c zeigen drei aufeinanderfolgende Schritte bei der Herstellung einer Felge als Fahrradfelge 1. In Figur 5a sind die beiden Formteile 51 und 52 der Herstellform 50 schematisch dargestellt. In das Formteil 51 ist die Verbundschicht 10 eingelegt, sodass die Kontaktfläche mit dem Formteil 51 von der Vlieslage 9 bedeckt wird. Dadurch stellt die Vlieslage 9 später bei der fertigen Felge 1 die äußere Sichtfläche 8 zur Verfügung, die im normalen Betrieb wahrnehmbar bzw. sichtbar ist. Nach dem Belegen des ersten Formteils und des zweiten Formteils sowie des Ringteils 53 wird die Herstellform 50 verschlossen, sodass sich der in Figur 5b dargestellte Zustand ergibt. Im Inneren der Felge 1 ist ein aufblasbarer Schlauch 18 schematisch eingezeichnet, der aufgepumpt wird, um von innen den nötigen Gegendruck zu erzeugen.

Auf den Außenseiten wird an den Felgenflanken 21 und 22 und dem Felgenboden 23 jeweils eine (durchgängige oder zweiteilige rechts/links) Vlieslage 9 vorgesehen, die an der späteren Felge 1 die von außen unmittelbar wahrnehmbare Sichtfläche 8 bildet.

Nach dem Erhitzen und dem Aushärten des Faserverbundmaterials kann die Herstellform 50 geöffnet werden. Dann wird das Ringteil 53 bzw. es werden dessen Segmente radial nach außen entnommen und es kann die fertige Felge 1 aus der Herstellform 50 entnommen werden.

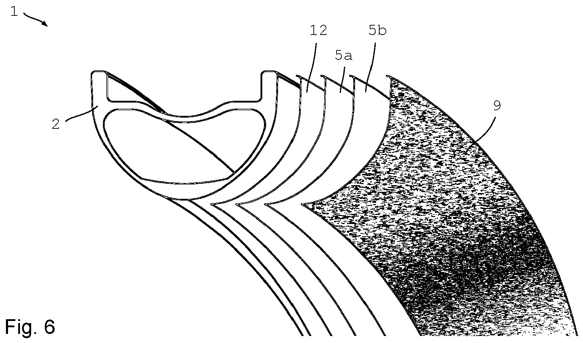

In den Felgenkörper 2 können anschließend Speichenlöcher 25 eingebracht werden und es kann überschüssiges Harz entfernt werden. Eine großflächige Nachbearbeitung der äußeren Sichtfläche ist nicht nötig. Figur 6 zeigt in schematischer perspektivischer Darstellung eine Felge 1. Dabei zeigt Figur 6 den Felgenkörper 2 der Felge 1, wobei auf der rechten Seite schematisch die äußere Vlieslage 9 und die beiden Prepreglagen 5a und 5b der Verbundschicht 10 sowie eine Verstärkungslage 12 eingezeichnet sind.

Insgesamt stellt die Erfindung hochwertige Fahrradfelgen zu Verfügung, bei denen die tragende Struktur durch Prepreglagen 5 gebildet wird. Eine hochwertige äußere Sichtfläche 8 wird durch eine dünne Vlieslage 9 zur Verfügung gestellt. Die Anzahl von optischen Defekten wird weitestgehend reduziert, sodass die Sichtfläche 8 weitestgehend ohne äußere Nachbehandlung bereitgestellt wird.

### Bezugszeichenliste:

| | | | |
|---|---|---|---|
| 1 | Fahrradfelge, Felge, Fahrradkomponente | 24 | Felgenbett |
| | | 24a | radiale Außenseite |
| 2 | Felgenkörper, Komponentenkörper | 25 | Speichenloch |
| | | 26 | Felgenhorn |
| 3 | tragende Struktur | 27 | Felgenhorn |
| 3a | Wandstärke | 28 | innere Außenfläche, Sichtfläche |
| 3b | minimale Wandstärke | | |
| 3c | maximale Wandstärke | 29 | Hohlkammer |
| 4 | Faserverbundwerkstoff | 30 | Lenkstange |
| 5 | Prepreglage | 40 | Rahmenbauteil |
| 5a | erste Prepreglage | 50 | Herstellform |
| 5b | zweite Prepreglage | 51 | Formteil |
| 6 | Verstärkungsfasern | 52 | Formteil |
| 7 | Harzmaterial | 53 | Ringteil |
| 8 | Sichtfläche | 60 | Unterlage |
| 9 | Vlieslage | 100 | Fahrrad |
| 9a | Dicke von 9 | 101 | Rad, Vorderrad |
| 10 | Verbundschicht | 102 | Rad, Hinterrad |
| 11 | äußere Lage von 10 | 103 | Rahmen |
| 12 | Verstärkungslage | 104 | Gabel, Federgabel |
| 13 | Lagengröße | 105 | Hinterraddämpfer |
| 16 | Fasermaterial von 9 | 106 | Lenker |
| 17 | Vliesfasern | 107 | Sattel |
| 18 | aufblasbarer Schlauch | 109 | Speiche |
| 21 | Felgenflanke | 110 | Nabe |
| 22 | Felgenflanke | 112 | Tretkurbel |
| 23 | Felgenboden | | |

## Patentansprüche

1. Fahrradfelge (1) für Fahrräder (100) mit wenigstens einem Felgenkörper (2) mit einer im bestimmungsgemäßen Betrieb wahrnehmbaren Sichtfläche (8), wobei eine tragende Struktur (3) des Felgenkörpers (2) aus einem Faserverbundwerkstoff (4) aus Prepreglagen (5) hergestellt ist, wobei der Felgenkörper (2) einander gegenüberliegende Felgenflanken (21, 22), ein Felgenbett (24) und einen Felgenboden (23) umfasst,
**dadurch gekennzeichnet,**
**dass** die Sichtfläche (8) durch eine dünne Vlieslage (9) auf der tragenden Struktur (3) ausgebildet ist, um bei der Herstellung eine optisch ansprechende sichtbare Oberfläche an dem Felgenkörper (2) auszubilden,
und **dass** die Vlieslage (9) an dem Felgenkörper (2) eine äußere Lage (11) einer Verbundschicht (10) ist, welche wenigstens eine Prepreglage (5) und die Vlieslage (9) umfasst.

2. Fahrradfelge nach Anspruch 1, wobei die Verbundschicht zwei Prepreglagen (5) mit unterschiedlich orientierten Verstärkungsfasern (6) und die Vlieslage (9) umfasst.

3. Fahrradfelge nach einem der vorhergehenden Ansprüche, wobei wenigstens eine Prepreglage (5) unidirektionale Verstärkungsfasern (9) umfasst.

4. Fahrradfelge nach einem der vorhergehenden Ansprüche, wobei die Vlieslage (9) weniger als 10% oder weniger als 5% zu der Stabilität des Felgenkörpers (2) beiträgt.

5. Fahrradfelge nach einem der vorhergehenden Ansprüche, wobei eine Dicke (9a) der Vlieslage weniger als 5% der Wandstärke (3a) der tragenden Struktur (3) des Felgenkörpers (2) beträgt und/oder wobei eine Dicke (9a) der Vlieslage (9) weniger als 0,1 mm beträgt.

6. Fahrradfelge nach einem der vorhergehenden Ansprüche, wobei ein Flächengewicht des Fasermaterials (15) der Vlieslage (9) 8 Gramm pro Quadratmeter +/- 50% beträgt.

7. Fahrradfelge nach einem der vorhergehenden Ansprüche, wobei die Prepreglagen (5) Endlosfasern (6) umfassen, die auf Lagengröße (13) zurechtgeschnitten sind.

8. Fahrradfelge nach einem der vorhergehenden Ansprüche, wobei die Vlieslage (9) als Prepreg-Vlies ausgebildet ist und wirr angeordnete Vliesfasern (17) unterschiedlicher Länge und Harz (7) umfasst.

9. Fahrradfelge nach einem der vorhergehenden Ansprüche, wobei der Vliesanteil an der Vlieslage (9) 40% +/- 20% beträgt.

10. Verfahren zur Herstellung einer Fahrradfelge (1) mit wenigstens einem Felgenkörper (2), bei dem die tragende Struktur (3) aus einem Faserverbundwerkstoff (4) aus Prepreglagen (5) hergestellt wird, wobei der Felgenkörper (2) einander gegenüberliegende Felgenflanken (21, 22), ein Felgenbett (24) und einen Felgenboden (23) umfasst, **dadurch gekennzeichnet,**
**dass** zur Ausbildung einer im bestimmungsgemäßen Betrieb wahrnehmbaren (sichtbaren) Sichtfläche (8) an dem Felgenkörper (2) eine Verbundschicht (10) aus einer dünnen Vlieslage (9) und wenigstens einer Prepreglage (5) so in die Herstellform (50) eingebracht wird, dass die Vlieslage (9) an der Herstellform (50) anliegt, sodass die Sichtfläche (8) durch die dünne Vlieslage (9) und die tragende Struktur (3) durch die Prepreglagen (5) ausgebildet werden, um bei der Herstellung eine optisch ansprechende sichtbare Oberfläche an dem Felgenkörper (2) auszubilden,
und **dass** die Vlieslage (9) an dem Felgenkörper (2) eine äußere Lage (11) einer Verbundschicht (10) ist, welche wenigstens eine Prepreglage (5) und die Vlieslage (9) umfasst.

11. Verfahren nach dem vorhergehenden Anspruch, wobei die Verbundschicht (10) zuvor dadurch gebildet wird, dass wenigstens eine Prepreglage (5) mit der Vlieslage (9) verbunden wird und wobei zur Ausbildung der Verbundschicht (10) auf einer Unterlage (60) wenigstens eine Prepreglage (5) aufgelegt und darauf die Vlieslage (9) gelegt und daran angedrückt wird.

12. Verfahren nach einem der beiden vorhergehenden Ansprüche, wobei die Verbundschicht (10) vor dem Einlegen in die Herstellform vakuumiert wird.

13. Verfahren nach einem der drei vorhergehenden Ansprüche, wobei die Verbundschicht (10) vollflächig an die Herstellform (50) angedrückt wird und wobei nach dem Einbringen/Einlegen der Verbundschicht (10) in die Herstellform (50) Verstärkungslagen (12) in die Herstellform (50) eingebracht/eingelegt werden.

14. Verfahren nach einem der vier vorhergehenden Ansprüche, wobei die mit den Prepreglagen (5) und der Vlieslage (9) und gegebenenfalls mit Verstärkungslagen (12) bestückte Herstellform (50) evakuiert wird und wobei die Herstellform (50) in eine Presseinrichtung eingebracht und beheizt wird.

15. Verfahren nach einem der fünf vorhergehenden Ansprüche, wobei zur Herstellung einer Felge auf dem das Felgenbett (24) ausbildenden Ringteil (53) unmittelbar eine Prepreglage (5) aufgebracht (und keine Vlieslage aufgebracht) wird und wobei nach der Entnahme der Felge (1) Speichenlöcher (25) eingebracht werden.
